# EUROPÄISCHE PATENTANMELDUNG

(11) **EP 2 395 148 A1**
(43) Veröffentlichungstag der Anmeldung: **14.12.2011**
(21) Anmeldenummer: 10165678.3
(22) Anmeldetag: 11.06.2010
(51) Int. Cl.: D21H 19/36, D21H 19/38, D21H 19/40, D21H 19/42, D21H 19/52, D21H 23/48, B41C 1/00, C09C 1/00, B41M 5/52

(54) **Verfahren zum Herstellen eines gestrichenen Papiers**

(71) Anmelder: Voith Patent GmbH, 89522 Heidenheim (DE); Omya Development AG, 4665 Oftringen (CH)
(72) Erfinder: Tietz, Martin, Dr., 89520 Heidenheim (DE); Fröhlich, Uwe, 89231 Neu-Ulm (DE); Schneider, Ulrike, 86159 Augsburg (DE); Berger, Susanne, Dr., 89542 Herbrechtingen (DE); Gane, Patrick Arthur Charles, 4852 Rothrist (CH); Hunziker, Philipp, 3007 Bern (CH); Gerteiser, Norbert, 4853 Riken (CH)

(57) **Zusammenfassung**

Die Erfindung betrifft ein Verfahren zur Herstellung eines gestrichenen Papiers, welches sich für einen späteren Flexodruck ohne Zwischentrocknung eignet, wobei auf ein Rohpapier wenigstens eine Auftragsschicht aufgebracht wird. Erfindungsgemäß ist vorgesehen, dass als wenigstens eine Auftragsschicht ein solches Pigmente und Füllstoffe enthaltendes Beschichtungsmaterial verwendet wird, das zumindest teilweise Partikel enthält, deren spezifische Oberfläche gleich/ größer 20 m²/g betragen, so dass das gestrichene Papier eine Auftragsschicht mit einer Tropfenfläche von gleich/ kleiner 30 cm² und die Auftragsschicht eine Porenstruktur mit einem Porenvolumen aller Poren zwischen gleich/ größer 0,1 bis 0,5 cm³/g und eine monomodale, bimodale oder multimodale Porengrößenverteilung mit einem Porendurchmesser von 0,01 bis 10 µm erreicht, wobei die Tropfenfläche mit einem Penetrations- Tropfentest und das Porenvolumen mit einer an sich bekannten Quecksilberporosimetrie ermittelt wird.

## Beschreibung

Die Erfindung betrifft ein Verfahren zum Herstellung eines gestrichenen Papiers, welches sich für einen späteren Flexodruck ohne Zwischentrocknung eignet.

Graphische Papiere, Karton und Verpackungspapiere werden zumeist mit einem Pigmentstrich gestrichen, wodurch man in Abhängigkeit vom gewählten Auftragsmedium Weiße, Glätte, Glanz und Opazität erreicht und auch die Bedruckbarkeit der Papiere verbessert. Dadurch sind diese Papiere geeignet, um als Informations- und Werbeträger dienen zu können. Das dazu vorgesehene Bedrucken erfolgt neben Digitaldruck vor allem in Form des Offsetdrucks und des Tiefdrucks.

Im zunehmenden Maße wird ein Hochdruckverfahren in Form des Flexodrucks angewendet, weil diese Druckart kostengünstiger und energiegünstiger ist als andere und auch einen schnellen und präzisen Druck bietet. Die Druckformen sind leicht austauschbar. Darüber hinaus eignet sich der Flexodruck für sehr dünne Papiere als auch für Papiere mit rauen Oberflächen.

Gegenwärtig werden Papiere hergestellt, die entweder ungestrichen bleiben, aber dafür eine weiße Faserdecke aufweisen oder aber gestrichen werden und mit einer weißen Pigmentschicht versehen werden. Diese Papiere, die als White- Top- Liner (WTL) und White- Top- Testliner (WTTL) in Fachkreisen bezeichnet werden, werden unter anderem mit dem besagten Flexodruck bedruckt. Dabei können die ungestrichenen Papiere ohne Zwischentrocknung zwischen den einzelnen Druckwerken bedruckt werden. Bei den gestrichenen Papieren ist gegenwärtig jedoch eine Zwischentrocknung erforderlich, da die Druckfarbe auf der Strichoberfläche nicht ausreichend schnell wegschlägt, also nicht schnell genug in das Papier penetriert. Ohne Zwischentrocknung würde es zu einem Verschmieren der Druckfarben im nachfolgenden Druckwerk, auf Transportbändern und auch Weiterverarbeitungseinrichtungen kommen. Das bedeutet, dass gegenwärtig keine gestrichenen Papiere im Flexodruck ohne Zwischentrocknung bedruckt werden können, weil eben die marktüblichen Papiere von ihren Eigenschaften her nicht die nötige Eignung aufweisen.

Aus dem Patentschriftenfonds sind folgende Druckschriften entnehmbar, auf die hier verwiesen werden soll:
In der US A- 5,439,707 ist eine Streichkomposition, enthaltend eine Mehrzahl von Mineralien zur Beschichtung von Linerboard (Karton), offenbart.

In der US A1-2005/ 0282026 ist eine Beschichtungskomposition für Druckverfahren, wie flexographischen Druck beschrieben. Die Beschichtungskomposition enthält unter anderem calciniertes Clay.

Die WO A1-2009/ 115416 beschreibt ein Verfahren zur Herstellung von druckfähigem Papier, sowie das hergestellte Papier, welches beschichtet wird und dazu ein poröses Pigment verwendet wird. Das Porenvolumen der Schicht beträgt mindestens 1,2 ml/m².

Aus der EP B1-1 642 742 ist ein Tintenstrahl-Aufzeichnungsblatt mit einer darauf gebildeten porösen Schicht sowie ein Verfahren zur Herstellung einer flexographischen Druckplatte bekannt.

Auf weitere Veröffentlichungen soll hier verwiesen werden:
Zeitschrift Chemische Technologie der Papiererzeugung/ PTS- Symposium 2005-Artikel Nr.46, Seite 1 bis 16:"Curtain Coating- Die Porenstruktur", in dem die Porenstruktur beim Vorhangstreichen analysiert wird.

Gane, P.A.C., Ridgway, C.J. (2001): "Rate absorption of flexographic ink into porous structures: Relation to dynamic polymer entrapment during preferred pathway imbibition", Advances in Printing Science and Technology Volume 27, edited by A. J. Bristow, Leatherhead, Surrey, Pira International, 59-86 (also 27th IARIGAI Research Conference Advances in Paper and Board Performance, Graz, 2000).

Ridgway, C.J., Gane, P.A.C., Schoelkopf, J. (2004): "Modified calcium carbonate coatings with rapid absorption and extensive liquid uptake capacity", Colloids and Surfaces A: Physicochem. and Eng. Asp., 236(1-3) 91-102 (also Advances in Printing Science and Technology, Proceedings of the 30th International Research Conference, iarigai, Dubrovnik 2003).

Ridgway, C.J., Gane, P.A.C., Schoelkopf, J. (2006): "Achieving rapid absorption and extensive liquid uptake capacity in porous structures by decoupling capillarity and permeability: Nanoporous modified calcium carbonate", Transport in Porous Media, 63(2), 239-259. (also Tappi 9th Advanced Coating Fundamentals Symposium, Turku, 2006)

Es ist Aufgabe der Erfindung, ein Verfahren und eine Vorrichtung zur Herstellung eines gestrichenen Papiers bereitzustellen, welche sich für einen späteren Flexodruck ohne Zwischentrocknung zwischen den einzelnen Druckvorgängen eignen. Außerdem ist ein dementsprechend beschichtetes bzw. gestrichenes Papier anzugeben.

Die Aufgabe der Erfindung wird gemäß einer ersten Erfindung mit einem Verfahren gemäß den Merkmalen des Anspruchs 1 gelöst.

Erfindungsgemäß ist vorgesehen, dass ein solches Pigmente und Füllstoffe enthaltendes Beschichtungsmaterial für die Auftragsschicht gewählt wird, das zumindest teilweise Partikel enthält, deren spezifische Oberfläche gleich/ größer 20 m²/g beträgt.

Damit erreicht man, dass die Auftragsschicht des beschichteten Papiers eine Tropfenfläche von gleich/ kleiner 30 cm² und eine Porenstruktur mit einem Porenvolumen aller Poren von gleich/ größer 0,1 bis 0,5 cm³/g und eine monomodale. bimodale oder multimodale Porengrößenverteilung mit einem Porendurchmesser von 0,01 bis 10 µm aufweist.

Als Hauptbestandteile des Beschichtungsmaterials bzw. des Auftragsmediums bzw. der Streichfarbe können folgende Pigmente und Füllstoffe verwendet werden:
Natürliches, gefälltes oder modifiziertes Calciumcarbonat; natürliches, calciniertes oder delaminiertes Kaolin, Clay, Talkum, Bentonit, Silikate (Silikagel, Natrium-, Magnesium-, Aluminium-, Calcium- Silikat); Nano- oder Mikrozellulose;
Aluminiumhydroxid; Kunststoffpigmente; Titandioxid sowie Kombinationen davon.

Diese eingestellten Parameter und das angegebene Beschichtungsmaterial ermöglichen es erstmals, dass ein gestrichenes Papier mittels Flexodruck (flexographischer Druck) ohne Zwischentrocknung zwischen den einzelnen Druckvorgängen bedruckt werden kann. Ein Schmieren und Ablagerungen auf Transportbändern in der Druckmaschine und den Weiterverarbeitungsmaschinen werden zuverlässig vermieden. Es werden außerdem Zeit und Kosten eingespart. Außerdem ist die erreichte Druckqualität hervorragend.

Das Verfahren lässt sich zweckmäßig ausgestalten, indem für die Auftragsschicht ein Beschichtungsmaterial gewählt wird, das zumindest teilweise Partikel enthält, deren spezifische Oberfläche gleich/ größer 50 m²/g, vorzugsweise gleich/ größer 80 m²/g betragen. Diese Partikeloberfläche wird nach BET bestimmt, wie in Brunauer, S.; Emmet, P.H.; Teller, E.; J.Am.Chem.Soc.60, 309 (1938) beschrieben ist.

Die Erfinder haben überdies erkannt, dass das gestrichene Papier dann besonders gut im Flexodruck ohne Zwischentrocknung bedruckbar ist, wenn seine Tropfenfläche von gleich/ kleiner 25 cm², vorzugsweise gleich/ kleiner 20 cm² erreicht wird.

Zur Bestimmung der Tropfenfläche ist ein Tropfentest vorgesehen.

Der Tropfentest selbst wird mit einer handelsüblichen Probedruckmaschine der Firma

Prüfbau München durchgeführt.

Ziel der Untersuchung mit Hilfe der Probedruckmaschine ist es, das Wegschlagverhalten bzw. die Penetrationsneigung von Papieren zu ermitteln.

Mit Hilfe des Prüfgerätes wird eine definierte Menge an Druckfarbe mittels eines definierten Andrucks auf das zu prüfende Papier erzeugt. Das Druckwerk wird auf eine Kraft von 350N eingestellt. Die Farbwerkstemperatur beträgt 23°C.

Das zu prüfende Papier wird auf Streifengröße von 230mm x47mm zugeschnitten und auf einen Probenträger gespannt. Vor dem Start des Druckprozesses wird eine definierte Menge an Farbe (18 µl, Flexodruckfarbe z.B. Flexo BS 385 Magneta) auf den Druckzylinder gegeben und anschließend wird der Probenträger mit dem Streifen durch das Gerät geschossen. Nach dem Druckprozess wird der bedruckte Papierstreifen vom Probenträger entnommen und für mindestens 24 Stunden zum Trocknen aufgehängt.

Nach der Trocknung wird der Probenstreifen in einem Scanner eingescannt und bildanalytisch ausgewertet. Hierzu wird ein Graustufenbild (16Bit grau) mittels Festlegung eines geeigneten Schwellenwertes binarisiert und die Fläche mit einer Software ausgewertet und auf die gescannte Fläche 200x40mm bezogen.

Man erhält damit Aussagen über das Wegschlagverhalten bzw. der Penetrationsneigung des untersuchten Papiers.

Sind die erzeugten Tropfen klein, zeugt das davon, dass gute

Bedruckbarkeitseigenschaften gegeben sind. Das heißt, dass die Weiterverarbeitbarkeit in Druckprozessen, wie insbesondere dem flexographischen Druck (Flexodruck ohne Zwischentrocknung) in guter Qualität möglich ist.

Bei großen Tropfen ist die Bedruckbarkeit weniger gut.

Aber auch für andere Druckverfahren, wie Flexodruck mit Zwischentrocknung sowie Offsetdruckverfahren ist die Qualitätsbeurteilung des Papiers mittels Tropfentest geeignet.

Um eine gute Bedruckbarkeit im einfarbigen und zweifarbigen Flexodruck (unter Standardbedingungen für weiß gedeckten Liner sind 8 bis 9 g Farbe/ m²/ Farbwerk vorgesehen) zu gewährleisten, sind folgende Grenzwerte einzuhalten:
Einfarbendruck: Tropfengröße nicht größer als 23% = 1840mm²;
Zweifarbendruck: nicht größer als 20% = 1600 mm².

Im durchgeführten Tropfentest (auch als Tropfenpenetrationstest bezeichenbar) mit der oben benannten Flexodruckfarbe und einem Tropfenvolumen von 18 µl und einem Anpressdruck in einem Druckwerk von 350 N, wurde eine Tropfengröße von ca 20 % =1600mm² Fläche - mehrfach reproduziert- erreicht, was ein gutes Druckergebnis bedeutet.

Besonders vorteilhaft für einen gewählten, späteren Flexodrucks ist es, wenn das Porenvolumen aller Poren der Auftragsschicht bei einem Porendurchmesser von gleich/ kleiner 10 µm gleich/ größer 0,1 cm³/g, vorzugsweise gleich/ größer 0,3 cm³/g, höchstvorzugsweise gleich/ größer 0,4 cm³/g ist, wobei die Porengrößenverteilung monomodal, bimodal oder multimodal ist.

Das Porenvolumen wird mit einer an sich bekannten Quecksilberporosimetrie gemessen, wie in Gane, Kettle, Matthews, Ridgway, Industrial Engineering Chemistry Research, 35 (1996) 1753-1764 beschrieben ist.

Im Rahmen der Erfindung kann vorgesehen sein, dass das Rohpapier mit einem an sich bekannten ein- oder mehrschichtig aufragenden Vorhang- Auftragswerk beschichtet wird. Ein solches Vorhang- Auftragswerk trägt das Auftragsmedium1:1, das heißt ohne Überschuss auf das Papier bzw. die laufende Papier- oder Kartonbahn bei ihrem Herstellungsprozess auf. Auf dem Papier wird also nur die Menge an Beschichtungsmaterial bzw. pigmenthaltigem Auftragsmedium aufgetragen, die auch auf dem Papier verbleiben soll. Man spart dadurch das Abrakeln auf ein gewünschtes Strichgewicht und die entsprechenden Rakeleinrichtungen.

Als Vorhang- Auftragswerk können insbesondere zwei Bauarten in Betracht kommen, nämlich eine Schlitzdüse (slot die) mit wenigstens einer sich über die Faserstoffbahnbreite erstreckenden Düse, aus der der Vorhang direkt nach unten im Wesentlichen der Schwerkraft folgend abgegeben wird. Eine zweite mögliche Bauart besteht in einer so genannten Gleitschichtdüse (slide die) aus der das Auftragsmedium zunächst über eine Gleitfläche des Auftragswerks läuft und von einer Abrisskante aus auf das zu beschichtende Substrat herabfällt. Mit beiden Bauarten kann man sowohl Einfach- als auch Mehrfach- Striche erzeugen.

Erfolgt der Auftrag mehrschichtig, so hat man den Vorteil, dass sich verschiedene Funktionen des Strichs durch einzelne Schichten des Farbfilms bzw. des Auftragsmediums erzielen lassen. So kann es vorteilhaft sein, wenn als unterste Auftragsschicht eine solche aufgetragen wird, die einen hohen Weißgrad, hohe Opazität und Abdeckung erzielt, wohingegen als oberste Schicht eine solche aufgetragen wird, die auf eine gute Glätte und Bedruckbark optimiert ist.

Mit dem erfindungsgemäßen Verfahren kann ein Gesamtstrichgewicht zwischen 5 und 25 g/m² aufgetragen werden.

Als Rohpapier eignet sich für das erfindungsgemäße Verfahren eines mit weißer Faserdecke oder ohne weiße Faserdecke. Vorzugsweise soll aber ein solches Papier verwendet werden, bei dem bei der Herstellung desselben eine weiße Faserdecke weggelassen ist. Dadurch lassen sich die Herstellungs- und vor allem Materialkosten des Papiers stark minimieren.

Das Rohpapier bzw. die Rohpapierbahn kann einlagig oder auch mehrlagig hergestellt sein. Im Falle der Mehrlagigkeit sollte diejenige Seite, die danach gestrichen wird, Füllstoffe und /oder Fasern enthalten, so dass eine gute Glätte erreicht wird, welche wiederum vorteilhaft für den Streichprozess ist.

Im Rahmen der Erfindung wird auch eine Vorrichtung zur Beschichtung des Rohpapiers mit den Merkmalen des Anspruchs 11 angegeben. Diese Vorrichtung weist ein an sich bekanntes Vorhang- Auftragswerk auf, mit welchem ein ein- oder mehrschichtiger Vorhang abgebbar ist. Dieser Medium- bzw. Farbvorhang fällt im Wesentlichen der Schwerkraft folgend, auf die Oberfläche des zu beschichtenden Papiers herab und hinterlässt dort eine entsprechende ein- oder mehrschichtige Auftragsschicht in gewünschter Auftragsbreite.

Die Erfindung ist jedoch nicht auf den Einsatz eines Vorhang- Auftragswerks beschränkt. Es sind auch andere bekannte Auftragsarten denkbar, z.B. das Filmstreichen oder Bladestreichen. Mit der letztgenannten Auftragsart erfolgt ein Auftrag des Beschichtungsmediums im Überschuss. Das heißt, das gewünschte Strichgewicht wird mit Hilfe eines nachfolgenden Rakelelementes, wie Klinge, Rakelstab oder Rakelleiste eingestellt.

Beim Filmstreichen wird ein Auftragsmediums- bzw. Farb- Film auf zumindest eine Auftragswalze vordosiert und im nachfolgenden Walzennip auf die Bahn bzw. das zu beschichtende Papier übertragen.

Das Auftragsverfahren kann sowohl online als auch offline erfolgen.

Im Rahmen der Erfindung ist gemäß Anspruch 13 auch die Verwendung der besagten Vorrichtung und des beschriebenen Verfahrens zur Herstellung eines gestrichenen Papiers, welches sich für einen späteren Flexodruck ohne Zwischentrocknung eignet, vorgesehen.

Die Aufgabe der Erfindung wird auch gelöst mit den im Anspruch 14 beschriebenen Merkmalen, indem ein gestrichenes Papier zur Verfügung gestellt wird, welches mit dem beschriebenen Verfahren und der Vorrichtung hergestellt ist und welches sich für einen späteren Flexodruck ohne Zwischentrocknung eignet. Das erfindungsgemäße, gestrichene Papier weist eine Tropfenfläche von gleich/ kleiner 30 cm² und die Auftragsschicht eine Porenstruktur mit einem Porenvolumen aller Poren zwischen gleich/ größer 0,1 bis 0,5 cm³/g sowie einer monomodalen, bimodalen oder multimodalen Porengrößenverteilung mit einem Porendurchmesser von gleich/ kleiner 0,1 bis 10 µm auf.

Die Erfindung ist nicht auf Liner beschränkt. Auch bei anderen gestrichenen Papiersorten, die im Flexodruck bedruckt werden, kann auf eine Zwischentrocknung zwischen den Druckwerken verzichtet werden, wenn ein derartiges Papier mit den genannten Eigenschaften verwendet wird.

Nachfolgend soll die Erfindung anhand eines Ausführungsbeispieles erläutert werden.

Es zeigen:
Figur 1: ein Vorhang- Auftragswerk in schematischer Seitenansicht für einen einschichtigen Auftrag auf eine laufende Faserstoffbahn;
Figur 2: ein Diagramm für die Porengrößenverteilung;

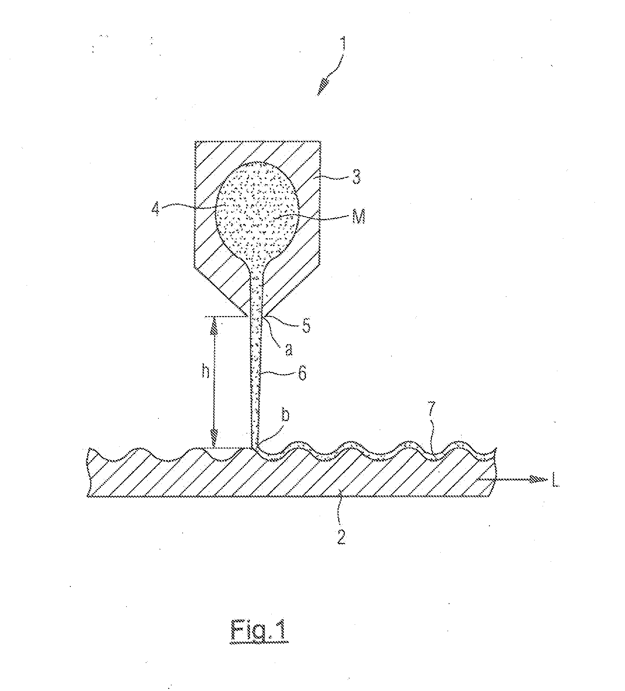

In Figur 1 ist als Vorhang- Auftragswerk 1 eine so genannte Slot die (Schlitzdüse) zum einschichtigen Auftragen eines Auftragsmediums M auf ein zu beschichtendes Papier 2 gewählt. Wie in Figur 1 erkennbar, ist das Papier 2 hier eine in Laufrichtung L mit einer Geschwindigkeit von größer 1000m /min sich bewegende Rohpapierbahn. Das Vorhang- Auftragswerk ist oberhalb des zu beschichtenden Papiers 2 bzw. der Bahn und vom Papier bzw, der Bahn beabstandet angeordnet.

Das Vorhang- Auftragswerk 4 weist einen oberhalb der Bahn 2 angeordneten und an die Breite der zu beschichtenden Bahn 2 angepassten Auftragskopf 3 auf,

Aus einer durchgängigen Auftragskammer 4, die in eine entsprechende Abgabe-Schlitzdüse 5 übergeht, welche in ihrer Spaltweite a einstellbar ist, fällt das Auftragsmedium M direkt nach unten in Form eines sich im Wesentlichen schwerkraftbedingt bewegenden und eine Höhe h aufweisenden Vorhanges 6. Der Vorhang 6 trifft in einer Auttrefflinie b (in Querrichtung der Bahn 2) auf der Oberfläche der laufenden Bahn auf und legt sich dabei als Konturschicht 7, die eine weiße Deckschicht bildet ab.

Im Beispiel enthält das verwendete Auftragsmedium M Natrium-Magnesium-Aluminium- Silikat. Die Faserstoffbahn selbst weist eine flächenbezogene Masse von 125 g/m² auf.

Das Porenvolumen aller Poren des Auftragsmediums M beträgt im Beispiel 0,43 cm³/g.

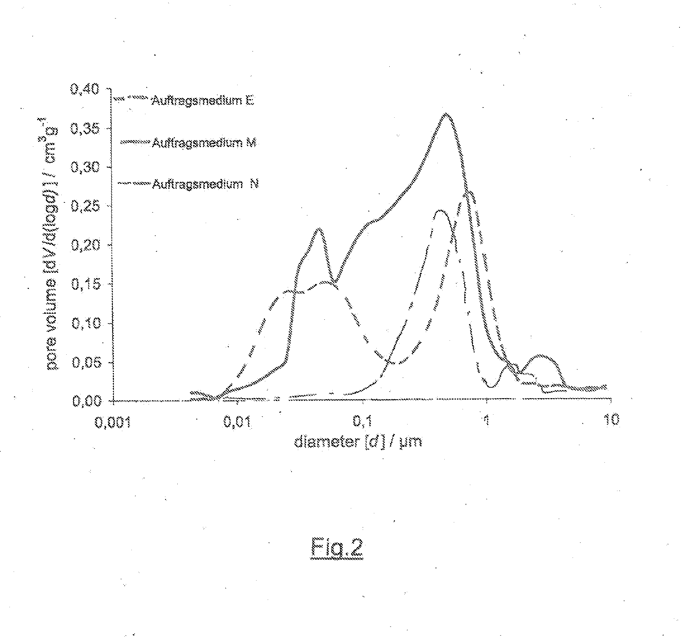

In Figur 2 ist die besagte Porengrößenverteilung in Form eines Diagramms angegeben. In der Ordinate ist das Porenvolumen in cm³/g und in der Abszisse ist der zugehörige Porendurchmesser in µm angegeben. Im gezeigten Diagramm sind drei verschiedene Auftragsmedien E, M und N angegeben.

Das Auftragsmedium E, welches in strichpunktierter Kurvenlinie angegeben ist, weist eine monomodale Porengrößenverteilung auf. Das Auftragsmedium M, welches in durchgezogener Kurvenlinie angegeben ist, weist eine multimodale Porengrößenverteilung auf und das Auftragsmedium N, welches mit gestrichelter Kurvenlinie angegeben ist, weist eine bimodale Porengrößenverteilung auf.

Das Vorhang- Auftragswerk ist oberhalb des zu beschichtenden Papiers 2 bzw. der Bahn und vom Papier bzw. der Bahn beabstandet angeordnet.

Das Vorhang- Auftragswerk 4 weist einen oberhalb der Bahn 2 angeordneten und an die Breite der zu beschichtenden Bahn 2 angepassten Auftragskopf 3 auf.

Aus einer durchgängigen Auftragskammer 4, die in eine entsprechende Abgabe-Schlitzdüse 5 übergeht, welche in ihrer Spaltweite a einstellbar ist, fällt das Auftragsmedium M direkt nach unten in Form eines sich im Wesentlichen schwerkraftbedingt bewegenden und eine Höhe h aufweisenden Vorhanges 6. Der Vorhang 6 trifft in einer Auftrefflinie b (in Querrichtung der Bahn 2) auf der Oberfläche der laufenden Bahn auf und legt sich dabei als Konturschicht 7, die eine weiße Deckschicht bildet ab.

Im Beispiel enthält das verwendete Auftragsmedium M Natrium-Magnesium-Aluminium- Silikat. Die Faserstoffbahn selbst weist eine flächenbezogene Masse von 125 g/m² auf.

Das Porenvolumen aller Poren des Auftragsmediums M beträgt im Beispiel 0,43 cm³/g.

## Patentansprüche

1. Verfahren zur Herstellung eines gestrichenen Papiers, welches sich für einen späteren Flexodruck ohne Zwischentrocknung eignet, wobei auf ein Rohpapier wenigstens eine Auftragsschicht aufgebracht wird, **dadurch gekennzeichnet, dass** als wenigstens eine Auftragsschicht ein solches Pigmente und Füllstoffe enthaltendes Beschichtungsmaterial verwendet wird, das zumindest teilweise Partikel enthält, deren spezifische Oberfläche gleich/ größer 20 m²/g betragen, so dass das gestrichene Papier eine Auftragsschicht mit einer Tropfenfläche von gleich/ kleiner 30 cm² und die Auftragsschicht eine Porenstruktur mit einem Porenvolumen aller Poren zwischen gleich/ größer 0,1 bis 0,5 cm³/g und eine monomodale, bimodale oder multimodale Porengrößenverteilung mit einem Porendurchmesser von 0,01 bis 10 µm erreicht, wobei die Tropfenfläche mit einem Penetrations-Tropfentest und das Porenvolumen mit einer an sich bekannten Quecksilberporosimetrie ermittelt wird.

2. Verfahren nach Anspruch 1, **dadurch gekennzeichnet, *dass*** für die Auftragsschicht ein Beschichtungsmaterial gewählt wird, welches als Pigment und Füllstoff natürliches, gefälltes oder modifiziertes Calciumcarbonat; natürliches, calciniertes oder delaminiertes Kaolin, Clay, Talkum, Bentonit, Silikate, wie Silikagel, Natrium-, Magnesium-, Aluminium-, Calcium- Silikat; Nano- oder Mikrozellulose; Aluminiumhydroxid; Kunststoffpigmente; Titandioxid; sowie Kombinationen davon enthält.

3. Verfahren nach Anspruch 1 oder 2, **dadurch gekennzeichnet, dass** für die Auftragsschicht ein Beschichtungsmaterial gewählt wird, das zumindest teilweise Partikel enthält, deren spezifische Oberfläche gleich/ größer 50 m²/g, vorzugsweise gleich/ größer 80 m²/g betragen.

4. Verfahren nach Anspruch 1 bis 3, **dadurch gekennzeichnet, dass** das beschichtete Papier eine Tropfenfläche von gleich/ kleiner 25 cm², vorzugsweise gleich/ kleiner 20 cm³ erreicht wird.

5. Verfahren nach Anspruch 1 bis 4, **dadurch gekennzeichnet, dass** das Porenvolumen aller Poren der Auftragsschicht bei einem Porendurchmesser von gleich/ größer 0,1 cm³/g, vorzugsweise gleich/ größer 0,3 cm³/g, höchstvorzugsweise gleich/ größer 0,4 cm³/g beträgt, wobei die Porengrößenverteilung monomodal, bimodal oder multimodal ist.

6. Verfahren nach wenigstens einem der Ansprüche 1 bis 5, **dadurch gekennzeichnet, dass** das Rohpapier bevorzugt mit einem an sich bekannten ein- oder mehrschichtig auftragenden Vorhang- Auftragswerk beschichtet wird.

7. Verfahren nach Anspruch 6, **dadurch gekennzeichnet, dass** bei einem mehrschichtigen Auftrag als unterste Auftragsschicht eine solche aufgetragen wird, die einen hohen Weißgrad, hohe Opazität und Abdeckung erzielt, wohingegen als oberste Schicht eine solche aufgetragen wird, die eine Glätte und Bedruckbarkeitseigenschaften aufweist.

8. Verfahren nach Anspruch 7, **dadurch gekennzeichnet, dass** ein Gesamtstrichgewicht zwischen 5 und 25 g/m² aufgetragen wird.

9. Verfahren nach einem der vorhergehenden Ansprüche, **dadurch gekennzeichnet, dass** als Rohpapier ein solches verwendet wird, bei dem vorzugsweise bei dessen Herstellung keine weiße Faserdecke erzeugt wird.

10. Verfahren nach einem der vorhergehenden Ansprüche, **dadurch gekennzeichnet, dass** das Rohpapier bzw. die Rohpapierbahn einlagig oder auch mehrlagig hergestellt wird, wobei im Falle der Mehrlagigkeit diejenige Seite, die danach gestrichen wird, Füllstoffe und /oder Fasern enthält.

11. Vorrichtung zur Durchführung des Verfahren nach einem der Ansprüche 6 bis 10, **dadurch gekennzeichnet, dass** zur Beschichtung des Rohpapiers (2) ein an sich bekanntes Vorhang- Auftragswerk (1) vorgesehen ist, mit welchem ein ein- oder mehrschichtiger Vorhang (6) abgebbar ist, der im Wesentlichen der Schwerkraft folgend auf die Oberfläche des zu beschichtenden Papiers (2) herabfällt und dort eine ein- oder mehrschichtige Auftragsschicht (7) erzielt.

12. Vorrichtung nach Anspruch 11, **dadurch gekennzeichnet, dass** als Vorhang-Auftragswerk (1) eine Schlitzdüse (slot die) oder Gleitschichtdüse (slide die) mit mindestens einem Austrittsschlitz (5) vorgesehen ist.

13. Verwendung einer Vorrichtung nach Anspruch 11 oder 12 sowie Verwendung eines Verfahrens nach einem der Ansprüche 1 bis 10 zur Herstellung eines gestrichenen Papiers, welches sich für einen späteren Flexodruck ohne Zwischentrocknung eignet.

14. Beschichtetes Papier, welches mit einem Verfahren gemäß der Ansprüche 1 bis 10 sowie mit einer Vorrichtung gemäß der Ansprüche 11 und 12 hergestellt ist und welches sich für einen späteren Flexodruck ohne Zwischentrocknung eignet, wobei das gestrichene Papier eine Tropfenfläche von gleich/ kleiner 30 cm² und die Auftragsschicht eine Porenstruktur mit einem Porenvolumen aller Poren zwischen gleich/ größer 0,1 bis 0,5 cm³/g und einem Porendurchmesser von 0,01 bis 10 µm aufweist.

15. Beschichtetes Papier nach Anspruch 14, **dadurch gekennzeichnet,**
**dass** es ein WTL (White-Top- Liner) oder ein WTTL (White-Top-Testliner) ist.
